# EUROPEAN PATENT SPECIFICATION

(11) **EP 4 407 975 B1**
(45) Date of publication and mention of the grant of the patent: **13.05.2026**
(21) Application number: 23153148.4
(22) Date of filing: 24.01.2023
(51) Int. Cl.: H04N 5/222, H04N 5/262, H04N 23/90

(54) **METHOD AND SYSTEM FOR CREATING DIGITALLY AUGMENTED CAMERA IMAGES CONTAINING IMAGE DATA OF A LED WALL**
VERFAHREN UND SYSTEM ZUR ERZEUGUNG DIGITAL ERWEITERTER KAMERABILDER MIT BILDDATEN EINER LED-WAND
PROCÉDÉ ET SYSTÈME DE CRÉATION D'IMAGES DE CAMÉRA AUGMENTÉES NUMÉRIQUEMENT CONTENANT DES DONNÉES D'IMAGE D'UNE PAROI À DEL

(43) Date of publication of application: 31.07.2024
(73) Proprietor: H-FOKUS d.o.o. Grude, Sovici 88345 (BA)
(72) Inventor: BARIC, Martina, 88340 Grude (BA)
(74) Representative: Meissner Bolte Düsseldorf Patentanwälte Rechtsanwälte Partnerschaft mbB

(56) References cited:
- WO-A1-2023/281250
- CN-A- 114 640 838
- DE-B3- 102021 126 309
- US-A1- 2020 143 592
- ANONYMOUS: "The DARK BAYVirtual Production Stage was built to provide film and television series productions with a", ARRI, 10 June 2021 (2021-06-10), pages 1 - 10, XP055974820, Retrieved from the Internet <URL:https://www.arri.com/news-en/arri-supported-the-creation-of-the-dark-bay-virtual-production-stage> [retrieved on 20221026]

## Description

The present invention relates to a method for creating digitally augmented camera images based on camera images captured by a digital camera which contain image data of a LED wall according to the subject-matter of claim 1, and to a corresponding (processing) system according to the subject-matter of claim 3.

Extended Reality (XR) is an umbrella term that covers various technologies that combine real-world camera footage captured by digital cameras with virtual content image data, such as computer-generated virtual graphics. It includes Virtual Reality, Augmented Reality, and Mixed Reality technologies. For the production of said effects, the actual camera footage needs to be combined with rendered virtual graphics or virtual content image data. The virtual content image data needs to be rendered in the correct perspective so that the combination of actual camera footage and the virtual content image data appear consistent. To ensure the correct rendering of virtual content image data, the camera position and/or orientation (referred to as camera pose in the context of this disclosure) need to be determined with great spatial and temporal precision.

In XR, the goal is often to combine the real camera footage with the virtual content image data in such a way that the virtual elements blend in seamlessly. This way, the audience watching the content enjoys the added virtual elements, yet feels like everything they are seeing is real. To achieve this goal, the virtual content image data must be rendered to match the real footage as closely as possible. For example, if the real-world camera uses an optical lens that distorts the captured images, then the virtual content image data should also be rendered distorted, imitating the real lens's effect in the captured images.

Virtual Reality effects have been achieved using so called green screens. These are areas covered uniformly with a specific shade of green that are placed in the background of a scene to be captured with a camera. Other colors can and have been used, but green is the most common. In the captured images, the specific shade of background color or its hue can be recognized and substituted by other video content. This allows the insertion of virtual content image data, e.g. of scenery image data that represents a background to the actors and objects captured in the scene. The process involves the selection of areas of the captured images based on the prevalence of a specific color or hue present on the background screen (such as a specific tone of green in the case of green screens), which are set transparent, allowing scenery image data to be inserted into the scene. This process is referred to as chroma keying. In the context of the present disclosure, virtual content image data is used synonymously with the expression "scenery image data", referring to computer-generated image data that can be sent to a LED wall for display, or used to (digitally) augment captured camera images.

A problem arising with the use of green screens and chroma keying is associated with the color based selection of the image areas that are to be substituted with scenery image data. In a real life scenario, the green background in the camera images does not have a perfectly uniform color tone or hue, due to uneven lighting and color distortions caused by the camera itself. In light of this, it is expedient to apply a certain tolerance in the color selection for chroma keying. The degree of tolerance, however, has to be chosen carefully. If the color or hue selection is overly narrow, not all areas which are to be augmented by (virtual) scenery image data will be selected, so that green artefacts will be visible in the augmented images. An excessive tolerance in the color or hue selection may lead to an inadvertent removal of image content.

A further challenge in using green screens is to adjust the lighting so that the actual footage matches the virtual graphics. This is especially difficult when the graphics are changing over time. For example, if a light source in the virtual graphics moves while the actual real-world light source remains static, the resulting footage that combines real and virtual elements looks unnatural.

For these reasons, among others, LED walls are preferred over green screens when it comes to producing a high quality virtual studio. LED walls are digital displays consisting of large numbers of individual light emitting diodes (LEDs) arranged in a grid.

Extended reality technology with LED walls was recently popularized by Lucasfilm in the hit Star Wars series "The Mandalorian" and since then it has been rapidly gaining popularity. This new XR technology is a modern day replacement for green screen studios.

A problem arising from the use of LED walls is associated with the limited dimension of LED walls. LED walls of satisfactory quality are rather expensive. Thus, budget limitations oftentimes dictate the use of smaller LED walls, which do not fill the entire background of a scene shot with a camera - in particular if the camera is positioned at a certain distance from the LED wall. In such cases, the shot images (also referred to as camera images in the context of this disclosure) have to be augmented with virtual content image data in areas outside those image areas depicting the LED wall, to artificially extend the LED wall graphics to areas of the camera image which are not already showing the LED wall.

Aside from budget constraints in building big LED walls, there are also other practical constraints which call for digital augmentation of the camera images to the areas not showing visual appearance of the LED wall. For example, if the wall is not completely surrounding the camera from all angles, and the camera makes a continuous 360 turn, areas without LED walls would be visible, and it is not always practically doable to build a surrounding LED wall around the complete set. The same is true when the camera looks up to the sky, if there is no LED wall on the ceiling, the camera would see an area not showing an LED wall.

If the augmentation data in the virtual content image data with which a camera image is to be extended does not closely match the graphics on the LED walls that is contained in the camera image, undesired artifacts will be visible in the digitally augmented camera images at the borders of the LED wall.

An associated problem that needs to be solved in virtual productions is the delay adjustment between scenery image data in the augmenting areas of a camera image and regions of interest from the camera image (which include both the real objects as well as the visual appearance of the LED walls displaying scenery image data).

In virtual productions using green screens this is not a difficult problem to solve. The camera tracking system determines the camera pose at a given time when a camera image is captured. All that needs to be done is that scenery image data rendered based on the determined camera pose is paired with the regions of interest extracted from the camera image made at the same point in time.

However, in virtual productions using LED walls, the problem is not as straightforward to tackle.

The problem lies in the fact that, when the camera is capturing a camera image containing the LED wall, some rendered scenery image data is displayed on the LED wall at the time the camera is capturing the image. However, the scenery image data displayed on the LED wall at the time when the camera captures a camera image usually does not correspond to the camera pose at which the camera image is captured.

In practice, the camera tracking system continuously determines the camera pose and sends it to the render engine workstation to generate scenery image data to be displayed on the LED wall. The rendering and display process cannot be performed instantly but requires a duration of several camera frames before scenery image data is rendered and finally displayed by physical LED wall pixels.

It may be exemplarily assumed, for the sake of argument, that this process takes 4 camera frames. This means that, at a time point T4 (when the camera is at a pose P4), the scenery image data that was rendered for the camera being positioned at camera pose P0 will be displayed.

Since such scenery image data, based on the already obsolete camera pose P0, is "baked into" the camera image captured at time point T4, it is not possible to get a perfect match between the real elements in the camera image (particularly the image data representing the LED wall displaying scenery image data corresponding to a camera pose P0) and virtual content image data for augmenting the camera image. Since the pose of the camera at time point T4 is not known when the rendering at pose P0 is initiated, it is not possible to provide suitable virtual content image data for augmenting a camera image captured at pose P4, which contains image data on an LED wall displaying image data rendered at pose P0.

The moving camera will thus always "see" the LED wall graphics rendered from an incorrect perspective. If the camera movement is not very fast, this problem is less noticeable. The problem becomes highly noticeable at the border between the augmenting areas of the camera image and the areas of the camera image that are representing the LED wall. When fast camera movements are performed, such that large changes in camera pose occur, it is extremely difficult to render scenery image data for augmenting camera images showing the LED wall without strong artefacts in the augmented images.

In light of the above, it is an object of the present invention to optimize methods and systems for the creation of digitally augmented camera images based on camera images captured by a digital camera which contain image data of a LED wall, in particular such that artefacts in the augmented images caused by the delay of the rendering and display process on the LED wall are reduced or essentially eliminated.

WO 2023/281250 A1 discloses a method for compositing video streams in virtual production that compensates for perspective disparities between captured footage of an LED wall and computer-generated imagery caused by system latency. The method involves applying a geometric transformation to either the captured video stream or the virtual rendering based on the camera's motion and the known delay to align the perspectives before stitching the streams together.

CN114640838 A describes a picture synthesis method for extended reality that addresses the misalignment between virtual and real elements caused by the latency between rendering and actual shooting times. This is achieved by re-projecting a first composite image according to the camera's position at the rendering moment onto a virtual screen and then re-capturing a virtual image from this projection based on the camera's position at the actual shooting moment to synthesize a final aligned image.

The above object is solved by a method for creating digitally augmented camera images based on camera images captured by a digital camera which contain image data of a LED wall according to the subject-matter of claim 1, and by a system according to the subject-matter of claim 4. Preferred embodiments of the present invention are defined by the subject-matter of the dependent claims.

In particular, the object of the invention is solved by the method of claim 1.

The invention is based on the insight that both the first and second camera pose are to be taken into consideration when generating the augmentation data. The first pose of the camera is accounted for due to the fact that the scenery image data (in which the augmentation data is comprised) is rendered for the first pose of the camera. The augmentation data is then derived from this scenery image data taking into account the second pose of the camera. In other words, the augmentation data is derived from the scenery image data (rendered for the first pose of the camera) such that the change of camera perspective, that is effected by the difference between the first camera pose and the second camera pose, is taken into account.

This change of camera perspective also impacts the appearance of the LED wall displaying the LED wall image data (rendered for the first pose of the camera) in the camera image (which is captured at the second pose of the camera). If the augmentation data takes into account change of camera perspective in an according manner, artefacts in the augmented camera images can be effectively suppressed.

It is thus preferred that the step of obtaining augmentation data comprises deriving image augmentation data from the scenery image data taking into consideration the relation and/or difference between the first and the second pose of the camera. Preferably, the augmentation data is derived from the scenery image data by applying a transformation to the scenery image data that corresponds to the relation and/or difference between the first and the second pose of the camera.

The step of rendering scenery image data for a first pose of the camera comprises the initiation of a rendering process that takes into account the first pose of the camera by setting the pose of a virtual camera in the rendering process to the first pose of the (physical) digital camera. Rendering scenery image data for a pose of the camera is thus equivalent to rendering scenery image data at said pose of the camera. The scenery image data produced by the rendering procedure in step (a) of the above method will usually only be available after the camera has left the first pose which is used for the rendering process. Rendering scenery image data for a certain pose of the camera thus designates the initiation of a rendering process in which the pose of the (physical) camera is used as pose for the virtual camera in the rendering process.

The step of deriving image augmentation data from (rendered) scenery image data can also comprise a re-rendering of the scenery image data for the first pose of the camera. Such a re-rendering at the same camera pose will yield the same scenery image data. In this case, it is preferred that the first pose of the camera (corresponding to the scenery image data) is identified before the image augmentation data is derived. This allows for a (re-)rendering of the scenery image data for the first pose of the camera, so that the scenery image data fits the LED wall display data that is contained in the camera image captured at the second pose of the camera. It is further preferred that the method comprises the step of storing the first pose of the camera, preferably when carrying out step (a) of the above method. This allows to identify the first pose of the camera when re-rendering the scenery image data for the first pose of the camera.

In the context of the present disclosure, the term "camera image" is used to designate images captured by a physical camera. The camera image captured by the (digital) camera is preferably provided as a digital image, that is usually composed of pixels, each with finite, discrete quantities of numeric representation for its intensity or gray level per pixel. These quantities are usually output as spatial coordinates denoted with x, y on the x-axis and y-axis, respectively. The 2D area that is spanned by the spatial coordinates representing the camera images is also referred to as (camera) image frame in the context of this disclosure.

In the context of the present disclosure, (virtual) scenery image data refers to computer-generated image data that is preferably obtained by a rendering process, and elements of which can be sent to a LED wall for display, or used to (digitally) augment captured camera images. LED wall display data corresponds to elements of scenery image data that are sent to a LED wall for display thereon. Image augmentation data corresponds to elements of scenery image data that is used to (digitally) augment camera images. In the context of the present disclosure, image augmentation data is derived from scenery image data.

The position of the camera designates an absolute 3D position of the camera in space. The pose of the camera designates a combination of the camera's position and an orientation of the camera. The orientation is preferably described by a vector parallel to the optical axis of the camera and pointing in the direction of the camera's field of view. This vector is referred to as "optical axis" of the camera in the context of the present invention. The optical axis may be represented by a vector running parallel to the optical axis and pointing in the direction of the camera's field of view, as described above, or may be described by a 3D line without directionality. In some embodiments, the orientation of the camera may further comprise information on the camera's roll, i.e. information on the angular orientation of the camera relative to the axis of rotation defined by the optical axis.

In order to determine the position and pose of the camera, a camera tracking system may be employed. Suitable camera tracking systems include systems based on odometry, GPS or optical tracking methods such as SLAM. An optical tracking system suitable for determining the position and pose of a camera is described, for example, in EP 1 211 520 A2.

According to the invention the image augmentation data is derived from the scenery image data by
- providing a 3D model of the LED wall;
- generating an extended 3D model of the LED wall based on the 3D model of the LED wall;
- projecting the scenery image rendered for the first pose of the camera onto the extended 3D model of the LED wall to obtain a textured extended 3D model of the LED wall;
- rendering the textured extended 3D model of the LED wall for the second pose of the camera to obtain the image augmentation data.

These steps present a particularly computationally effective and conceptually straightforward solution for taking into account the impact of a camera perspective change when generating digitally augmented camera images with rendered scenery image data. The problem of matching augmentation data to image data of camera images with a LED wall appearance baked into the camera images arises due to the limited size of the LED wall and the fact that the LED wall cannot provide a background for the entire image frame of the camera. The present embodiment directly tackles the problem of the invention at its root by virtually extending the size of the LED wall such that it fills the entire image frame of the camera. In this context, it is preferred that the extended 3D model of the LED wall is generated to be coplanar with the 3D model of the LED wall. It is further preferred that the extended 3D model of the LED wall extends beyond the borders of the 3D model of the LED wall in at least one, preferably in all directions.

The scenery image data generated for the first pose of the camera is projected onto the extended (virtual) 3D model of the LED wall to obtain a textured extended 3D model of the LED wall, i.e. a virtual model of an extended LED wall displaying not only the LED wall display data on the limited area of the actual LED wall, but also the image information of the scenery image data from which the augmentation data is to be derived. Since the scenery image data is rendered for the first pose of the camera, the projection on the extended 3D model of the LED wall takes into account the first pose of the camera.

Alternatively, the scenery image data can be rendered onto the extended (virtual) 3D model of the LED wall for the first pose of the camera to obtain the textured extended 3D model of the LED wall. In the context of the present disclosure, the notion of projecting image data onto a 3D model is equivalent to overlaying the image data over the 3D model. Preferably, no transformation of the rendered image data takes place during the overlay process. The projection or overlay of image data onto the 3D model yields a textured 3D model, which contains image information on a two-dimensional plane in 3D space. This textured 3D model can then be used to determine how the appearance of the overlay or projection of the image data onto the 3D model looks from different poses of the camera.

At the second pose of the camera, the actual LED wall is captured in the camera image under a different perspective than the first pose, displaying LED wall display data that corresponds to scenery image data rendered for the first pose of the camera.

The change in perspective appearance of the LED wall that is effected by the difference between the first pose and the second pose of the camera is directly applied to the scenery image data from which the augmentation data is obtained by rendering the textured extended 3D model of the LED wall for the second pose. By rendering the textured extended 3D model of the LED wall for the second pose, the second pose of the camera is taken into account when obtaining the augmentation data for the camera image.

The step of projecting the scenery image rendered for the first pose of the camera onto the extended 3D model of the LED wall to obtain a textured extended 3D model of the LED wall can be initiated when the camera is in the first pose. In this case, the textured extended 3D model of the LED wall is stored for later use at the second pose of the camera. Alternatively, the step of projecting the scenery image rendered for the first pose of the camera onto the extended 3D model of the LED wall to obtain a textured extended 3D model of the LED wall can also comprise a re-rendering of the scenery image data for of the first pose of the camera after the camera has left the first pose. In this case, it is preferred that the first pose of the camera (corresponding to the scenery image data) is identified, preferably by storing and recalling it, before the textured extended 3D model of the LED wall is created.

It is further preferred that the method is implemented as a pipelined process. The requirement of continuous (re-)rendering of image scenery data for consecutive poses of the camera is advantageously implemented as a pipeline process, such that when last rendering steps are performed for a frame, first rendering steps are executed done for the consecutive frame.

The 3D model of the LED wall, as well as the extended 3D model of the LED wall, preferably contain (Cartesian) 3D coordinates of at least some delimiting features of the (extended) LED wall. If the LED wall is constituted by a rectangular screen, for example, the 3D model may contain at least the (Cartesian) coordinates of the corners of the LED wall. In the context of the disclosure, the methods and systems are described in the context of camera images containing image data of a (single) LED wall. Of course, the inventive concepts are also applicable to a setting in which a plurality of LED walls is employed and the captured camera images contain image data of more than one LED wall. The concepts described for one LED wall in the context of this disclosure are readily implemented to account for a plurality of LED walls. It should also be noted that, in case one or more LED walls are configured as movable LED walls, the corresponding 3D model(s) can be time-dependent to represent the correct position and orientation of the LED wall at every point in time. In this case, it is preferable that the position and orientation of the LED wall(s) is tracked, e.g. by a suitable image processing algorithm based on camera images, and that the 3D model of the LED wall is updated in real time.

If a 3D model of the LED wall is provided, it can be used for the determination of the augmenting areas. The determining of the augmenting areas comprises
- providing a 3D model of the LED wall that is captured in the input image;
- establishing a position and pose of the camera;
- calculating the image position of the LED wall in the input image based on the 3D model of the LED wall and the established position and pose of the camera;
- determining the augmenting areas based on the image position of the LED wall in the input image.

Areas of the input image that do not depict the LED wall (and, thus, represent augmenting areas) can be determined with high reliability, accuracy and speed if a 3D model of the LED wall is provided. The camera position and pose (during the capture of an input image) is established, and the position of the LED wall in the input image can be calculated based on the 3D model of the LED wall and the position and pose of the camera.

In an example not covered by the claims, the movement of the camera is predetermined in advance, and the step of rendering scenery image data at the first pose of the camera takes into account the second pose of the camera for the rendering process. The predetermination of the camera movement can be achieved, e.g., by use of a programmable motion control system.

It has surprisingly been found that, if the camera movement can be predicted, the problem of matching augmentation data to image data of the LED wall baked into the camera images can be eliminated completely, if the delay between initiating a rendering process and displaying corresponding parts of the scenery image data thus obtained on the LED wall is known. For example, if said delay is known to have a duration of 4 camera frames, the (already predetermined) camera pose at frame x+4 can be used for the rendering process initiated for the camera pose at frame x. Since the real camera will be at the known pose of frame x+4 in the future, the render engine can already start rendering LED wall display data for the LED wall in advance. This way, by the time the camera is at the pose of frame x+4, the LED wall display data displayed on the LED wall at that time is already rendered from the correct camera pose, and the camera is positioned in the correct pose to capture the camera image. In order to augment the camera image containing image data of the LED wall, image augmentation data that matches the LED wall display data contained in the camera image captured at frame x+4 can be derived from scenery image data rendered for the camera pose of frame x+4.

The object of the present invention is furthermore solved by a digital image processing system according to claim 3.

The technical advantages achievable with the digital image processing system of the present invention correspond to those achieved with the corresponding method for creating digitally augmented camera images based on camera images captured by a, preferably digital, camera, which contain image data of a LED wall displaying LED wall display data controlling the appearance of a LED wall described above. Aspects, features and advantages described in the context of the inventive method are also applicable to the inventive system, and vice versa.

In particular, any task that the processing unit (or further units like the storage unit and the communication unit described below) of the inventive system is configured to perform can be carried out as a method step in the inventive method, and vice versa. Preferably, the inventive method is performed using a corresponding inventive system.

The information on first and second pose of the camera can be implemented as vector information comprising a (Cartesian) position of the camera and a vector indicating the orientation of the camera for each pose.

The processing unit (as well as the storage unit and the communication unit described below) can be implemented as physically separate entities, and/or can be implemented as software modules that are contained and executed in a common computing unit.

According to a preferred embodiment, the digital image processing system comprises a storage unit for storing data. The storage unit is communicatively coupled to the processing unit for data exchange. Preferably, the storage unit is configured to store a 3D model of the LED wall, and/or an extended 3D model of the LED wall, and/or a textured 3D model of the LED wall, and/or information on the first pose of the camera. The communication unit is configured to provide the stored data to the processing unit, inter alia for creating the image augmentation data.

It is further preferred that the digital image processing system comprises a communication unit for communicatively coupling the digital image processing system to a LED wall controller and/or the camera. This increases the compatibility of the digital image processing system with existing camera and LED wall equipment.

The object of the invention is further solved by a computer-readable medium containing instructions that, when executed by at least one processor, cause the at least one processor to perform a computer-implemented method comprising steps in accordance with the inventive methods described above. The technical advantages achieved with the method of the present invention correspond to those achieved with the computer-implemented method and corresponding computer-readable medium. Aspects, features and advantages described in the context of the inventive method are also applicable to the inventive computer-implemented method and computer-readable medium.

The above and further features and advantages of the present invention will become more readily apparent from the following detailed description of preferred embodiments of the invention with reference to the accompanying drawings, in which:
- Fig. 1: a schematic illustration of an application scenario of the present invention, with a camera capturing a camera image which contains image data of a LED wall displaying LED wall display data;
- Fig. 2: a schematic illustration of a camera image captured in the scenario of Fig. 1, containing areas with image data of the LED wall, and augmentation areas for (digital) augmentation;
- Fig. 3: the camera image of Fig. 2 with the LED wall displaying LED wall display data, and with a schematic representation of augmentation data in the augmentation areas;
- Fig. 4a: a schematic representation of a LED wall displaying LED wall display data and corresponding augmentation data at a first pose of the camera;
- Fig. 4b: a schematic representation of the LED wall displaying LED wall display data rendered for the first pose of the camera, and corresponding augmentation data that fails to properly take into consideration the movement of the camera to a second pose;
- Fig. 5: a schematic illustration of the scenario of Fig. 1 indicating an extended 3D model of the LED wall;
- Fig. 6: a schematic illustration of the scenario of Fig. 5 indicating a textured extended 3D model of the LED wall.

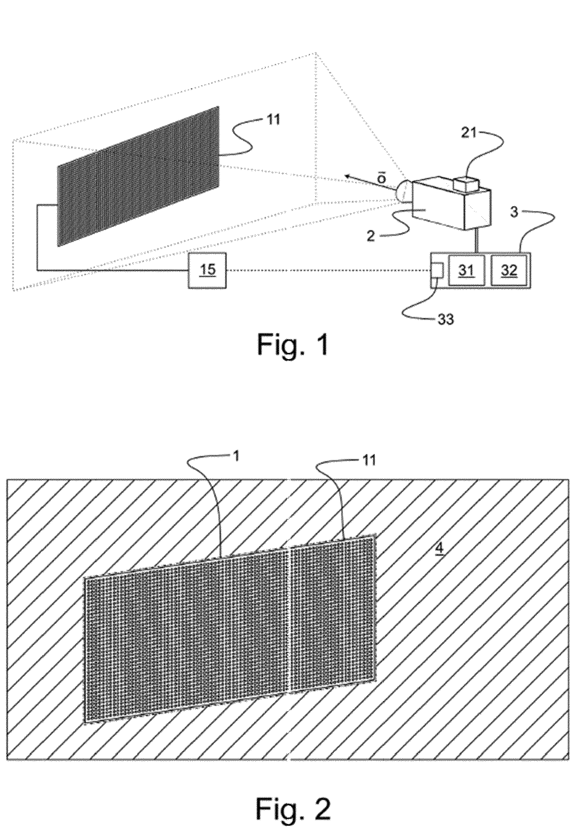

Fig. 1 shows a schematic illustration of a scenario in which the methods and systems according to the present invention may be used. Fig. 1 shows a digital image processing system 3. The system 3 comprises a processing unit 31 and a storage unit 32, which will be described in greater detail below. The system 3 is connected to a camera 2. It can be constituted by a separate unit or be comprised in the electronic components of the camera 2. The camera 2 is provided to shoot a scenery containing a LED wall 11. The LED wall 11 constitutes an object of interest, which will be contained in camera images captured by the camera 2. In front of the LED wall 11, further objects of interest may be located, such as a person.

The camera 2 may be a photo camera for shooting still images or, more preferably, a movie camera for capturing movie sequences constituted by a plurality of sequential images. The area that is captured by the camera 2 is indicated in Fig. 1 by dotted lines. The camera 2 is equipped with a tracking system 21 which is configured to establish a position and/or pose of the camera 2. The position of the camera 2 may be determined as three-dimensional in Cartesian space. The pose of the camera 2 comprises the position of the camera 2, as well as the orientation of the camera 2, which is schematically depicted in Fig. 1 as vector o̅ corresponding to the camera's optical axis.

The system 3 further comprises a communication unit 33. The communication unit 33 may be constituted by a terminal for connecting a communication line such as a network cable, or by a wireless interface. The communication unit 33 is configured to establish a communication link of the system 3 to a LED wall controller 15, as indicated by a dashed line. The LED wall controller 15 is connected to the LED wall 11 and is configured to control the visual appearance of the LED wall 11 by controlling the brightness and color of the individual LED wall pixels.

In order to control the (visual) appearance of the LED wall 11, the system 3 is configured to create display signals that are sent to the LED wall controller 15. The display signals comprise image data that may be provided as pixel-based color information to be displayed by individual LED wall pixels of the LED wall 11.

The scenario depicted in Fig. 1 may be encountered when shooting a movie scene, in which actors are positioned before the LED wall 11 which displays LED wall display data that comprises scenery image data such as a scene background, or in a television production studio, where an anchorman is presenting news or weather forecasts in front of the LED wall 11. In this scenario, the scenery image data which comprises the LED wall display data may not only provide an optical background, but also contain additional information such as a weather map or a virtual studio background.

Fig. 2 is a schematic illustration of an image captured by the camera 2 in the setting depicted in Fig. 1. The area captured by the camera 2, that is indicated by dotted lines in Fig. 1, is contained in an image frame of the camera 2 and yields a camera image which is schematically illustrated in Fig. 2. The camera image is preferably provided as a pixel-based, digital image. In the camera image, the LED wall 11 is visible. The LED wall 11 constitutes an object of interest which, in case of a digital processing of the input image, is to be maintained, at least in great parts, in the camera image. The entirety of the camera image area covered by objects of interest may be referred to as a region of interest 1 and is delimited in Fig. 2 by a dash-dotted line.

The camera image of Fig. 2 further contains areas that do not depict any object of interest such as the LED wall 11, i.e. areas outside the region of interest 1. These areas, which are cross-hatched in Fig. 2, are designated as augmenting area(s) 4. In the case of digital processing of the camera image, the augmenting area(s) 4 is/are to be augmented with augmentation data. For the sake of clarity, the entirety of augmenting areas 4 in the input image(s) is referred to as augmenting area 4.

In the case of a movie scene, the augmenting area 4 may be augmented with scenic imagery complementing the scenery displayed on the LED wall 11. In the case of a television production studio, it may be desirable to display an extension of the virtual studio content that is partially depicted on the LED wall 11 in the augmenting area 4.

In the context of the present embodiment, both the LED wall display data that is displayed on the LED wall 11 and contained as image data in the captured camera images, and the augmentation data that is to be provided to the augmenting area 4 in the image augmentation process are constituted by scenery image data which is obtained by a rendering process. In order to produce a camera image with a natural perspective, the rendering of the scenery image data takes into account the actual pose of the physical camera 2.

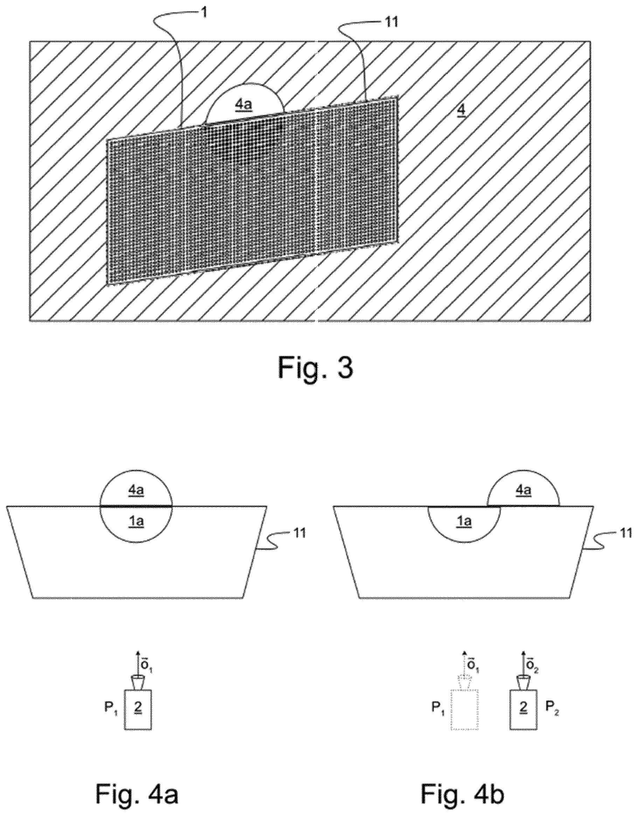

Fig. 3 shows an exemplary camera image in which the LED wall 11 displays LED wall display data that is obtained by rendering a scene with a virtual sun. The lower part of the virtual sun contained in the (rendered) scenery image data is contained in the LED wall display data and correspondingly displayed on the LED wall 11. Due to the limited dimensions of the LED wall 11, the upper part of the virtual sun cannot be displayed on the LED wall 11. The upper part of the virtual sun is thus contained in the part of the (rendered) scenery image data that is to be used as augmentation data in the augmenting process of the camera image. The upper part of the virtual sun contained in the augmentation data is schematically depicted in Fig. 3.

If the pose of the camera 2 is static, the position of the virtual sun in the scenery image data is also static. The scenery image data is rendered for the static pose of the camera. A part of the scenery image data containing the lower part of the virtual sun is sent to the LED wall controller 15 as LED wall display data for display on the LED wall 11. A camera image captured at the static pose of the camera 2 can be readily augmented with augmentation data from the same rendering process (containing the upper part of the virtual sun), since the camera pose on which the rendering of the scenery image data was based is identical to the camera pose at which the camera image is captured. However, if the camera 2 is moved between the initiation of the rendering process at a first pose and the capturing of the camera image at a second pose, the augmentation data obtained from the rendering process for the first pose of the camera 2 will not be suitable for augmenting the camera image captured at the second pose of the camera 2.

Fig. 4a and 4b illustrate the effect of the change in camera pose. Fig. 4a and 4b again refer to a scenario in which the scenery image data comprises an object which is very far away, like a virtual sun. Again, the camera 2 is placed at a height such that an upper part 4a of the virtual sun is rendered above the LED wall 11 in the augmenting areas 4 of captured camera images, while a lower part 1a of the virtual sun is contained in the part of the scenery image data that is used as LED wall display data for display on the LED wall 11.

Fig. 4a shows a situation in which the camera 2 is placed at a first pose P₁ with a first position and a first orientation o̅₁̅ of the optical axis. When the camera is static at the first pose P₁, and the scenery image data is rendered for the first pose P₁, the lower part 1a of the sun is displayed on the correct position of the LED wall 11 and the upper part 4a of the sun is rendered in the correct position in the augmenting area, so the sun in the final resulting composite image looks round as it should.

Fig. 4b represents a situation after the camera 2 has performed a lateral movement parallel to the surface of the LED wall, to arrive at a second pose P₂ with a second position and a second orientation o̅₂̅ of the optical axis. In an ideal situation in which the rendering of scenery image data for a given pose of the camera is performed instantaneously without any delay, scenery image data for the second pose of the camera could be provided and the LED wall display data would perfectly match the augmenting data.

However, in reality, the rendering of scenery image data for a given pose of the camera cannot be performed instantaneously. Assuming that the entire rendering and display pipeline delay is equal to the time it took the camera 2 to move from the first pose P₁ to the second pose P₂ in Fig. 4a and 4b, the LED wall display data will contain the lower part 1a of the sun at the same position as in Fig. 4a. The reason for this is that, at the start of the camera's movement, the command was issued to render scenery image data for the first pose P₁ of the camera 2. This rendering process is only completed after the movement to the second pose P₂. The LED wall display data will be taken from scenery image data rendered for the first pose P₁ of the camera 2. Correspondingly, the lower part 1a of the sun will appear on the LED wall 11 at the same position as it has before the movement of the camera 2. The augmentation data is based on the actual (second) pose P₂ of the camera 2, thus, the upper part 4a of the sun will not match the position of the lower part 1a of the sun that is contained in the LED wall display data which is actually displayed on the LED wall 11 and thus baked into the camera image when the camera 2 has arrived at the second pose P₂.

At first glance, it could be assumed that a (putative) solution to the problem might be to use the scenery image data rendered for the first pose P₁ of the camera for obtaining the augmentation data at the second pose P₂, because the LED wall display data is also based on the scenery image data rendered for the first pose of the camera 2. However, the upper part 4a of the sun in the augmenting areas would still not be matching the lower part 1a of the sun displayed on the LED wall 11. This is because a lateral movement of the camera 2 should basically have no effect on the position of the (infinitely distanced) sun if the orientation of the camera 2 didn't change. However, since the actual LED wall 11 is not located at an infinite distance to the camera 2, the position of the lower part 1a of the sun on the LED wall 11 has to change upon lateral movement of the camera 2, in order to maintain the illusion that the sun is at an infinite distance to the camera 2.

Using the scenery image data rendered for the first pose P₁ of the camera 2 to augment a camera image captured at the second pose P₂ of the camera 2 will not yield a consistent augmented camera image, because the position of the sun on the LED wall 11 changes with a change in pose of the camera whereas the position of the sun in the rendered scenery image data is basically stationary. Due to the rendering and display delay, the LED wall display data does not match the augmentation data rendered for the same camera pose when the camera has performed a (substantial) movement during the duration of the rendering and pipeline delay.

If it is assumed, for the sake of illustration, that the rendering pipeline delay has a duration of four camera frames, and that the movement of the camera 2 from the first pose P₁ to the second pose P₂ was performed within a duration of four camera frames, the first camera image upon arrival at the second pose P₂ will still contain the LED wall 11 displaying the lower part 1a of the sun at the same position as in Fig. 4a, because the LED wall display data in Fig. 4b is based on scenery image data rendered for the first pose P₁ of the camera 2. If the camera 2 remains at the second pose P₂, the next camera image will contain the LED wall 11 displaying the lower part 1a of the sun further to the right, because the LED wall display data displayed on the LED wall 11 at that frame is based on scenery image data rendered for a position of the camera 2 that is further to the right. In the subsequent camera images, the position of the lower part 1a of the sun will move further and further to the right and "catch up" with the position of the upper part 4a of the sun. If the camera 2 is maintained at the second pose P₂ for a duration at least equal to the rendering pipeline delay, the LED wall display data will eventually catch up with and match the augmentation data.

That mismatch between the visual appearance of the LED wall in the camera image and the augmentation data is the main contributing factor which is ruining the illusion in XR setups. The present invention solves this mismatch of the visual appearance of the LED walls in camera images, and the augmentation data in the augmenting areas. The solution that the invention provides to the described problem is to derive the augmentation data required at the second pose P₂ of the camera 2 from the scenery image data rendered for the first pose of P₁ of the camera 2, whilst taking into consideration the second pose P₂ of the camera 2.

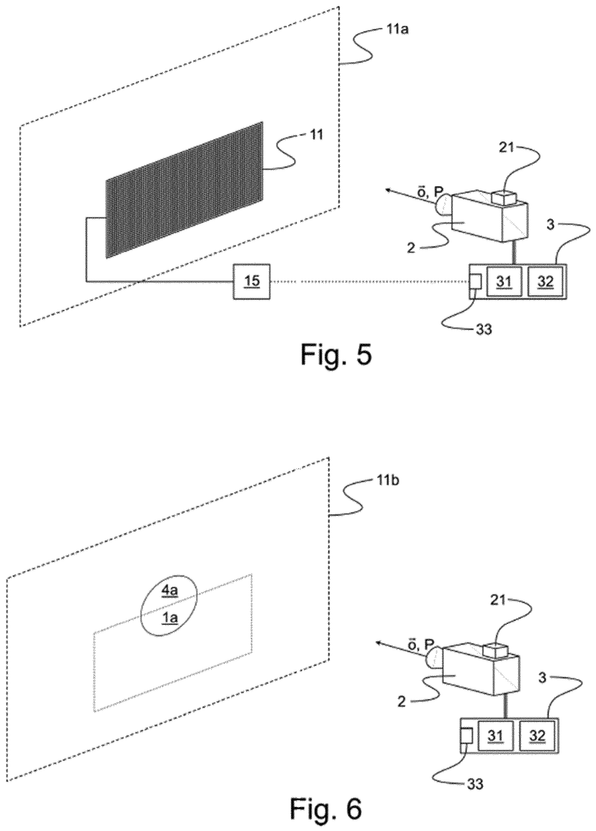

Fig. 5 schematically illustrates an embodiment of the present invention. Shown is a scenario corresponding to that of Fig. 1 - a camera 2 is placed in the vicinity of a LED wall 11 and configured to capture camera images containing the LED wall 11. The camera 2 is equipped with a tracking system 21 that is configured to determine the position, orientation o̅ and, thus, pose P of the camera 2. The camera 2 is coupled to a digital image processing system 3, comprising a processing unit 31, a storage unit 32 and a communication unit 33. One or more units of the image processing system 3 can be constituted by separate units or be comprised in the electronic components of the camera 2. The digital image processing system 3 is communicatively coupled to a LED wall controller 15, which is configured to control the visual appearance of the LED wall 11 by controlling the brightness and color of the individual LED wall pixels.

The camera 2 captures camera images containing image data representing the LED wall 11. The digital image processing system 3 is configured to render scenery image data for display on the LED wall. The rendering of the scenery image data requires a (virtual) camera pose as basic input. In order to create a realistic impression of a virtual scenery in the camera images, the pose P of the camera 2 is used as input for the rendering of scenery image data, in other words, scenery image data is rendered for a pose P of the camera 2 which is determined by the tracking system 21.

In order to tackle the mismatch problem between LED wall display data and augmentation data when the camera 2 is moved from a first pose P₁ to a second pose P₂, the digital image processing system 3 is configured to perform the method described in the following. It will be appreciated by a person skilled in the art that the different method steps can be carried out in any of the sub-units of the digital image processing system 3. Merely for ease of description it is assumed that process steps relating to data and image processing are performed in the processing unit 31, process steps related to the storage and retrieval of data are performed in the storage unit 32, and process steps relating to data exchange with other entities like the LED wall controller 15 are performed in the communication unit 33.

When the camera 2 is at a given pose P₁, scenery image data is rendered in the digital image processing system for the pose P₁ of the camera 2. A part of the rendered scenery image data is sent to the LED wall controller 15 for display on the LED wall 11. As explained, this rendering and display process is prone to a delay which will cause the above-detailed mismatch problems between LED wall display data baked into the camera images and augmentation data which is derived from rendered scenery image data.

In order to address the described mismatch problem, the digital image processing system 3 stores a 3D model of the LED wall 11. Together with the information on the pose P of the camera 2 that is provided by the tracking system 21, the relative and absolute positions and orientations of the camera 2 and the LED wall 11 are available in the digital image processing system 3.

The digital image processing system 3 generates an extended 3D model 11a of the LED wall 11 based on the 3D model of the LED wall 11. The extended 3D model 11a of the LED wall 11 may be represented by a virtual plane in the virtual 3D environment. The position and orientation of the virtual plane representing the extended 3D model 11a of the LED wall 11 preferably matches the position and orientation of the real LED wall 11, with the exception that the extended 3D model 11a is extended substantially, ideally indefinitely, beyond the borders of the LED wall 11. Thus, the extended 3D model 11a of the LED wall 11 can cover areas in the camera images corresponding to the augmenting areas. The extended 3D model 11a of the LED wall 11 can be generated once (particularly in the case of a static LED wall 11), or be updated regularly or be generated on demand if required.

As explained above, the digital image processing system 3 renders scenery image data for the first pose P₁ of the camera 2. The rendered scenery image data for the first pose P₁ of the camera 2 is then (virtually) projected onto the extended 3D model 11a of the LED wall 11. Alternatively, the scenery image data can be rendered onto the extended (virtual) 3D model 11a of the LED wall 11. This yields a textured extended 3D model 11b of the LED wall 11.

The textured extended 3D model 11b of the LED wall is derived from the scenery image data rendered for the first pose P₁ of the camera 2. It is memorized in the digital image processing system 3. This enables the digital image processing system 3 to mimic the real-world effect and look at the textured extended 3D model 11b with "baked in" projections, from a camera pose different than the one used to create the projections.

Fig. 6 schematically illustrates the scenario of Fig. 5, in which the textured extended 3D model 11b is shown. As in Fig. 4a and 4b, the rendered scenery comprises a virtual sun. The border of the 3D model of the LED wall 11 is indicated on the textured extended 3D model 11b with a dotted line. The upper part 4a of the virtual sun is contained on the part of the textured extended 3D model 11b that will be used to derive augmentation data. The lower part 1a of the virtual sun is contained in an area corresponding to the 3D model of the LED wall 11 and will thus be contained in the LED wall display data that is sent to the LED wall controller 15 for display on the LED wall 11.

When the camera is moved to a second pose P₂ at a point in time at which the LED wall display data which is derived from the scenery image data rendered for the first pose P₁ of the camera 2 is displayed on the LED wall 11, and a camera image is captured, the camera image contains image data of the LED wall 11 that displays scenery image data rendered for the first pose P₁ of the camera 2. The augmentation data required to augment this camera image is derived from the scenery image data rendered for the first pose P₁ of the camera 2 under consideration of the second pose P₂ of the camera 2. This is achieved by rendering the textured extended 3D model 11b of the LED wall 11 (which is derived from scenery image data rendered for the first pose P₁ of the camera 2) for the second pose P₂ of the camera 2. With this approach, the digital image processing system 3 mimics what an extended LED wall with scenery image data rendered for the first pose P₁ of the camera 2 would look like from the second pose P₂ of the camera 2. This ensures that the LED wall display data baked into the camera image and the augmentation data match in the augmented camera image.

In the example of Fig. 6 this means that the upper part 4a and the lower part 1a of the virtual sun will match perfectly in the augmented camera image captured at the second pose P₂ of the camera 2. With the described method, there will be no visible tearing of the graphics at the borders of the LED wall 11 on sudden moves of the camera 2.

## Claims

1. Method, preferably computer-implemented method, for creating digitally augmented camera images based on camera images captured by a camera (2), which contain image data of a LED wall (11) displaying LED wall display data, which is contained in computer-rendered scenery image data, the method comprising:
a) rendering scenery image data for a first pose (P₁) of the camera (2);
b) sending LED wall display data comprised in the scenery image data to the LED wall (11) for display;
c) capturing, with the camera (2), a camera image containing image data of the LED wall (11) displaying the LED wall display data at a second pose (P₂) of the camera (2); and
d) augmenting the camera image with image augmentation data to obtain an augmented camera image, wherein the image augmentation data is derived from the scenery image data, taking into consideration the second pose (P₂) of the camera (2),
wherein the image augmentation data is derived from the scenery image data by
• providing a 3D model of the LED wall (11);
• generating an extended 3D model (11a) of the LED wall (11) based on the 3D model of the LED wall (11);
• projecting the scenery image data rendered for the first pose (P₁) of the camera (2) onto the extended 3D model (11a) of the LED wall to obtain a textured extended 3D model (11b) of the LED wall;
• rendering the textured extended 3D model (11b) of the LED wall (11) for the second pose (P₂) of the camera (2) to obtain the image augmentation data.

2. Method according to claim 1, wherein the movement of the camera (2) is predetermined in advance, and wherein the step of rendering scenery image data at the first pose (P₁) of the camera (2) takes into account the second pose of the camera (2) for the rendering process.

3. Digital image processing system (3) for creating digitally augmented camera images with rendered scenery image data that comprises LED wall display data for display on a LED wall (11) and image augmentation data for digitally augmenting camera images containing image data of the LED wall (11), the digital image processing system being communicatively connectable to a camera (2) and comprising:
• a processing unit (31) that is configured to
• receive information on a first pose (P₁) of the camera (2);
• communicate information on the first pose (P₁) of the camera (2) to a rendering engine for rendering scenery image data for the first pose (P₁) of the camera (2);
• effect communication of LED wall display data comprised in the scenery image data to a LED wall (11) for display thereon;
• receive information on a second pose (P₂) of the camera (2);
• receive a camera image captured by the camera (2) at the second pose (P₂) of the camera (2) that contains image data of the LED wall (11) displaying the LED wall display data;
• augment the camera image with image augmentation data to obtain an augmented camera image, wherein the image augmentation data is derived from the scenery image data, taking into consideration the second pose (P₂) of the camera (2),
• a storage unit (32) for storing data, for storing a 3D model of the LED wall (11) to be provided to the processing unit (31), for storing an extended 3D model (11a) of the LED wall (11) to be provided to the processing unit (31), for storing a textured extended 3D model (11b) of the LED wall (11) to be provided to the processing unit (31), and for storing information on the first pose (P₁) of the camera (2) to be provided to the processing unit (31) for creating the image augmentation data;
wherein the processing unit (31) is configured to derive image augmentation data from the scenery image data by
• generating an extended 3D model (11a) of the LED wall (11) based on the 3D model of the LED wall (11);
• projecting the scenery image data rendered for the first pose (P₁) of the camera (2) onto the extended 3D model (11a) of the LED wall to obtain a textured extended 3D model (11b) of the LED wall;
• rendering the textured extended 3D model (11b) of the LED wall (11) for the second pose (P₂) of the camera (2) to obtain the image augmentation data.

4. Digital image processing system according to claim 3, comprising a communication unit (33) for communicatively coupling the digital image processing system to a LED wall controller (15) and/or the camera (2).

5. Computer-readable medium containing instructions that, when executed by at least one processor, cause the at least one processor to perform a computer-implemented method according to any of claims 1 to 2.

## Patentansprüche

1. Verfahren, vorzugsweise computerimplementiertes Verfahren, zum Erzeugen digital erweiterter Kamerabilder basierend auf von einer Kamera (2) aufgenommenen Kamerabildern, die Bilddaten einer LED-Wand-Anzeigedaten anzeigenden LED-Wand (11), enthalten, welche in computergerenderten Szeneriebilddaten enthalten sind, das Verfahren umfassend:
a) Rendern von Szeneriebilddaten für eine erste Pose (P₁) der Kamera (2);
b) Senden von in den Szeneriebilddaten umfassten LED-Wand-Anzeigedaten an die LED-Wand (11) zur Anzeige;
c) Aufnehmen, mit der Kamera (2), eines Kamerabildes, das Bilddaten der LED-Wand (11) enthält, die die LED-Wand-Anzeigedaten anzeigt, in einer zweiten Pose (P₂) der Kamera (2); und
d) Erweitern des Kamerabildes mit Bilderweiterungsdaten, um ein erweitertes Kamerabild zu erhalten, wobei die Bilderweiterungsdaten unter Berücksichtigung der zweiten Pose (P₂) der Kamera (2) aus den Szeneriebilddaten abgeleitet werden,
wobei die Bilderweiterungsdaten aus den Szeneriebilddaten abgeleitet werden durch
- Bereitstellen eines 3D-Modells der LED-Wand (11);
- Erzeugen eines erweiterten 3D-Modells (11a) der LED-Wand (11) basierend auf dem 3D-Modell der LED-Wand (11);
- Projizieren der für die erste Pose (P₁) der Kamera (2) gerenderten Szeneriebilddaten auf das erweiterte 3D-Modell (11a) der LED-Wand, um ein texturiertes erweitertes 3D-Modell (11b) der LED-Wand zu erhalten;
- Rendern des texturierten erweiterten 3D-Modells (11b) der LED-Wand (11) für die zweite Pose (P₂) der Kamera (2), um die Bilderweiterungsdaten zu erhalten.

2. Verfahren gemäß Anspruch 1, wobei die Bewegung der Kamera (2) im Voraus festgelegt ist und wobei der Schritt des Renderns von Szeneriebilddaten in der ersten Pose (P₁) der Kamera (2) die zweite Pose der Kamera (2) für den Rendering-Prozess berücksichtigt.

3. Digitales Bildverarbeitungssystem (3) zum Erzeugen digital erweiterter Kamerabilder mit gerenderten Szeneriebilddaten, das LED-Wand-Anzeigedaten zur Anzeige auf einer LED-Wand (11) und Bilderweiterungsdaten zum digitalen Erweitern von Bilddaten der LED-Wand (11) enthaltenden Kamerabildern umfasst, wobei das digitale Bildverarbeitungssystem kommunikativ mit einer Kamera (2) verbindbar ist und umfassend:
- eine Verarbeitungseinheit (31), die so konfiguriert ist, dass sie
- Informationen über eine erste Pose (P₁) der Kamera (2) empfängt;
- Informationen über die erste Pose (P₁) der Kamera (2) an eine Rendering-Engine übermittelt, um Szeneriebilddaten für die erste Pose (P₁) der Kamera (2) zu rendern;
- Kommunikation der in den Szeneriebilddaten enthaltenen LED-Wand-Anzeigedaten an eine LED-Wand (11) bewirkt, um sie dort anzuzeigen;
- Informationen über eine zweite Pose (P₂) der Kamera (2) empfängt;
- ein von der Kamera (2) in der zweiten Pose (P₂) der Kamera (2) aufgenommenen Kamerabild, das Bilddaten der die LED-Wand-Anzeigedaten anzeigenden LED-Wand (11) enthält, empfängt;
- das Kamerabild mit Bilderweiterungsdaten erweitert, um ein erweitertes Kamerabild zu erhalten, wobei die Bilderweiterungsdaten aus den Szeneriebilddaten unter Berücksichtigung der zweiten Pose (P₂) der Kamera (2) abgeleitet werden,
- eine Speichereinheit (32) zum Speichern von Daten, zum Speichern eines 3D-Modells der LED-Wand (11), das der Verarbeitungseinheit (31) bereitzustellen ist, zum Speichern eines erweiterten 3D-Modells (11a) der LED-Wand (11), das der Verarbeitungseinheit (31) bereitzustellen ist, zum Speichern eines texturierten erweiterten 3D-Modells (11b) der LED-Wand (11), das der Verarbeitungseinheit (31) bereitzustellen ist, und zum Speichern von Informationen über die erste Pose (P₁) der Kamera (2), die der Verarbeitungseinheit (31) bereitzustellen sind, um die Bilderweiterungsdaten zu erzeugen;
wobei die Verarbeitungseinheit (31) konfiguriert ist, Bilderweiterungsdaten aus den Szeneriebilddaten abzuleiten, indem sie
- ein erweitertes 3D-Modell (11a) der LED-Wand (11) basierend auf dem 3D-Modell der LED-Wand (11) erzeugt;
- die für die erste Pose (P₁) der Kamera (2) gerenderten Szeneriebilddaten auf das erweiterte 3D-Modell (11a) der LED-Wand projiziert, um ein texturiertes erweitertes 3D-Modell (11b) der LED-Wand zu erhalten;
- das texturierte erweiterte 3D-Modell (11b) der LED-Wand (11) für die zweite Pose (P₂) der Kamera (2) rendert, um die Bilderweiterungsdaten zu erhalten.

4. Digitales Bildverarbeitungssystem gemäß Anspruch 3, umfassend eine Kommunikationseinheit (33) zum kommunikativen Koppeln des digitalen Bildverarbeitungssystems mit einer LED-Wand-Steuerung (15) und/oder der Kamera (2).

5. Computerlesbares Medium, das Anweisungen enthält, die, wenn sie von mindestens einem Prozessor ausgeführt werden, den mindestens einen Prozessor veranlassen, ein computerimplementiertes Verfahren gemäß einem der Ansprüche 1 bis 2 auszuführen.

## Revendications

1. Procédé, de préférence procédé mis en œuvre par ordinateur, de création d'images de caméra augmentées numériquement, sur la base d'images de caméra capturées par une caméra (2), qui contiennent des données d'image d'une paroi à DEL (11) qui affiche des données d'affichage de paroi à DEL, lesquelles sont contenues dans des données d'image de paysage rendues par ordinateur, le procédé comprenant:
a) le rendu de données d'image de paysage pour une première pose (P₁) de la caméra (2) ;
b) l'envoi de données d'affichage de paroi à DEL (11) incluses dans les données d'image de paysage, à la paroi à DEL (11) pour l'affichage;
c) la capture, par la caméra (2), d'une image de caméra contenant des données d'image de la paroi à DEL (11) affichant les données d'affichage de paroi à DEL, dans une deuxième pose (P₂) de la caméra (2), et
d) l'augmentation de l'image de caméra par des données d'augmentation d'image afin d'obtenir une image de caméra augmentée, dans lequel les données d'augmentation d'image sont dérivées des données d'image de paysage, en tenant compte de la deuxième pose (P₂) de la caméra (2),
dans lequel les données d'augmentation d'image sont dérivées des données d'image de paysage par
• la fourniture d'un modèle 3D de la paroi à DEL (11) ;
• la génération d'un modèle 3D étendu (11a) de la paroi à DEL (11) sur la base du modèle 3D de la paroi à DEL (11) ;
• la projection des données d'image de paysage rendues pour la première pose(P₁) de la caméra (2) sur le modèle 3D étendu (11a) de la paroi à DEL afin d'obtenir un modèle 3D étendu texturé (11b) de la paroi à DEL ;
• le rendu du modèle 3D étendu texturé (11b) de la paroi à DEL (11) pour la deuxième pose (P₂) de la caméra (2) afin d'obtenir les données d'augmentation d'image.

2. Procédé selon la revendication 1, dans lequel le mouvement de la caméra (2) est prédéterminé par avance et dans lequel l'étape de rendu des données d'image de paysage dans la première pose (P₁) de la caméra (2) tient compte de la deuxième pose de la caméra (2) pour le processus de rendu.

3. Système de traitement d'images numériques (3) pour la création d'images de caméra augmentées numériquement avec des données d'image de paysage rendues, comprenant des données d'affichage de paroi à DEL pour l'affichage sur une paroi à DEL (11) et des données d'augmentation d'image pour l'augmentation numérique d'images de caméra contenant des données d'image de la paroi à DEL (11), le système de traitement d'images numériques pouvant être connecté de manière communicative à une caméra (2) et comprenant:
• une unité de traitement (31) qui est configurée pour
• recevoir des informations sur une première pose (P₁) de la caméra (2) ;
• communiquer des informations sur la première pose (P₁) de la caméra (2) à un moteur de rendu pour le rendu de données d'image de paysage pour la première pose (P₁) de la caméra (2)
• faire communiquer des données d'affichage de paroi à DEL incluses dans les données d'image de paysage, à une paroi à DEL (11) pour les afficher sur celle-ci;
• recevoir des informations sur une deuxième pose(P₂) de la caméra (2) ;
• recevoir une image de caméra capturée par la caméra (2) dans la deuxième pose (P₂) de la caméra (2), qui contient des données d'image de la paroi à DEL (11) affichant les données d'affichage de paroi à DEL;
• augmenter l'image de caméra par des données d'augmentation d'image afin d'obtenir une image de caméra augmentée, dans lequel les données d'augmentation d'image sont dérivées des données d'image de paysage, en tenant compte de la deuxième pose (P₂) de la caméra (2),
• une unité de stockage (32) pour stocker des données, pour stocker un modèle 3D de la paroi à DEL (11) destiné à être fourni à l'unité de traitement (31), pour stocker un modèle 3D étendu (11a) de la paroi à DEL (11) destiné à être fourni à l'unité de traitement (31), pour stocker un modèle 3D texturé étendu (11b) de la paroi à DEL (11) destiné à être fourni à l'unité de traitement (31), et pour stocker des informations sur la première pose (P₁)de la caméra (2) destinées à être fournies à l'unité de traitement (31) pour la création des données d'augmentation d'image,
dans lequel l'unité de traitement (31) est configurée pour dériver des données d'augmentation d'image à partir des données d'image de paysage, en
• générant un modèle 3D étendu (11a) de la paroi à DEL (11) sur la base du modèle 3D de la paroi à DEL (11) ;
• projetant les données d'image de paysage rendues pour la première pose (P₁) de la caméra (2), sur le modèle 3D étendu (11a) de la paroi à DEL afin d'obtenir un modèle 3D étendu texturé (11b) de la paroi à DEL ;
• rendant le modèle 3D étendu texturé (11b) de la paroi à DEL (11) pour la deuxième pose (P₂) de la caméra (2) afin d'obtenir les données d'augmentation d'image.

4. Système de traitement d'images numériques selon la revendication 3, comprenant une unité de communication (33) pour coupler de manière communicative le système de traitement d'images numériques à une commande de paroi à DEL (15) et/ou à la caméra (2).

5. Support lisible par ordinateur contenant des instructions qui, lorsqu'elles sont exécutées par au moins un processeur, amènent ledit au moins un processeur à exécuter un procédé mis en œuvre par ordinateur selon l'une quelconque des revendications 1 à 2.
